# EUROPEAN PATENT SPECIFICATION

(11) **EP 3 046 893 B1**
(45) Date of publication and mention of the grant of the patent: **21.11.2018**
(21) Application number: 14845724.5
(22) Date of filing: 05.09.2014
(51) Int. Cl.: C04B 35/565, C04B 35/56, C04B 38/00, C04B 35/52, C04B 35/573, C04B 35/80

(54) **METHOD OF PRODUCING A CERAMIC ARTICLE**
VERFAHREN ZUR HERSTELLUNG EINES KERAMIKARTIKELS
PROCÉDÉ DE PRODUCTION D'UN ARTICLE EN CÉRAMIQUE

(30) Priority: 19.09.2013 US 201361879784 P
(43) Date of publication of application: 27.07.2016
(73) Proprietor: United Technologies Corporation, Farmington, CT 06032 (US)
(72) Inventor: SHEEDY, Paul, Bolton, CT 06043 (US); SCHMIDT, Wayde R., Pomfret Center, CT 06259 (US); KASHYAP, Tania Bhatia, West Hartford, CT 06084 (US); BEALS, James T., West Hartford, CT 06107 (US); MAGDEFRAU, Neal, Tolland, CT 06084 (US)
(74) Representative: Dehns
(86) International application number: PCT/US2014/054290
(87) International publication number: WO 2015/041871

(56) References cited:
- EP-A2- 0 603 888
- GB-A- 1 417 134
- JP-A- H10 182 232
- US-A- 4 342 837
- US-A- 5 902 760
- US-A- 5 922 300
- US-A- 6 001 756
- US-B2- 7 335 330

## Description

### BACKGROUND

Ceramic structures, such as silicon carbide-containing structures, can be produced using any of various known ceramic processing techniques. One example structure includes a matrix of silicon carbide and fibers that are dispersed in the matrix. The silicon carbide matrix can be deposited among the fibers using a polymer-infiltration-pyrolysis ("PIP") process, for example. The PIP process typically involves infiltrating a fiber structure with a pre-ceramic polymer, and then thermally converting the pre-ceramic polymer to ceramic material. The infiltration process can be repeated to achieve a desired density in the structure. However, using this or other known ceramic processing techniques often results in deficiencies, such as incomplete densification, microcracking and residual unreacted material. These deficiencies can later debit the properties of the structure, such as long term oxidative stability and environmental durability.

EP0603888 and US5922300 disclose methods of producing a SiC fiber, the methods comprising: heating solid silicon monoxide powder to provide gaseous silicon monoxide; and exposing a carbon-containing fiber material to the gaseous silicon monoxide to convert free carbon of the free-carbon-containing material to silicon carbide.

### SUMMARY

A method of producing a ceramic article according to an example of the present disclosure includes heating solid silicon monoxide to provide gaseous silicon monoxide and exposing a structure having a free-carbon-containing material to the gaseous silicon monoxide to convert free carbon of the free-carbon-containing material to silicon carbide. The solid silicon monoxide is provided as a particulate dispersed in a coating on at least a portion of the structure. The coating includes a polymeric carrier phase and the particulate of the solid silicon monoxide is dispersed in the polymeric carrier phase. The polymeric carrier phase is a preceramic polymer, and the method further includes converting the preceramic polymer phase to a ceramic material.

In a further embodiment of any of the foregoing embodiments, the exposing includes heating the coated structure to convert the particulate of the solid silicon monoxide in the polymeric carrier phase to the gaseous silicon monoxide.

In a further embodiment of any of the foregoing embodiments, the particulate of the solid silicon monoxide is provided in an amount that is stoichiometrically equal to or greater than the amount of free carbon.

In a further embodiment of any of the foregoing embodiments, the free carbon is residual free carbon from a prior thermal process used to form the structure.

In a further embodiment of any of the foregoing embodiments, the free carbon is in a coating on the structure.

In a further embodiment of any of the foregoing embodiments, the structure is an elongated, uniform diameter fiber.

In a further embodiment of any of the foregoing embodiments, the structure is a porous body.

Disclosed herein is an intermediate article including a solid structure having free carbon and a solid, *in-situ* source of silicon monoxide gas. The solid structure may be selected from the group consisting of an elongated, uniform diameter fiber and a porous body. The solid, *in-situ* source of silicon monoxide gas may be a particulate that is dispersed in a polymeric carrier phase. The polymeric carrier phase may be a preceramic polymer. The free carbon may be in a coating of the solid structure.

Disclosed herein is a composition which includes a polymeric carrier phase and particulate of solid silicon monoxide dispersed in the polymeric carrier phase. The polymeric carrier phase may be a preceramic polymer.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example method of producing a ceramic article.
Figure 2 illustrates an example method of producing a ceramic article from another structure.
Figure 3 illustrates another example method of producing a ceramic article from another structure including a porous body.

### DETAILED DESCRIPTION

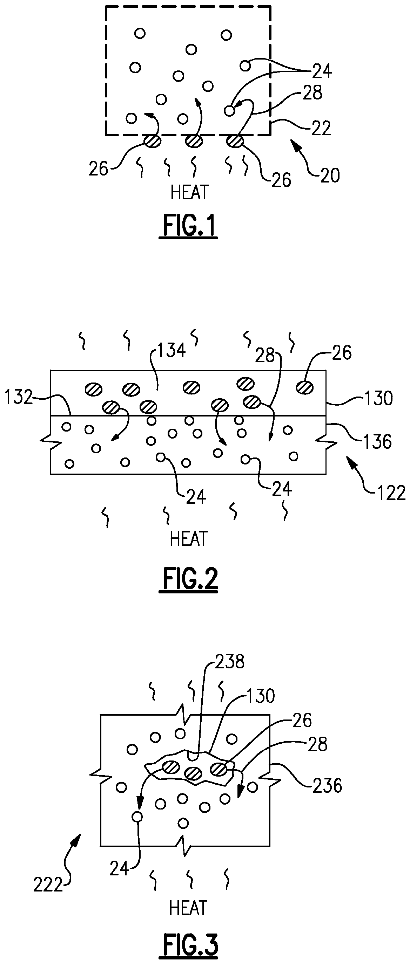

Figure 1 schematically depicts a method 20 of producing a ceramic article. As will be described, the method 20 is applicable in a variety of different circumstances to produce a ceramic article that can have enhanced densification, reduced microcracking and reduced amounts of residual unreacted material.

For the purpose of description, the method 20 will be described with respect to a structure 22 that has a free-carbon-containing material 24. For example, the free-carbon-containing material 24 can be free carbon alone or free carbon that is interdispersed with another material or materials. The structure 22 can be a fiber or fiber structure, porous body or other type of structure that has free carbon.

The method 20 includes heating solid silicon monoxide 26 to provide gaseous silicon monoxide, represented at 28. The structure 22, including the free-carbon-containing material 24, is exposed to the gaseous silicon monoxide 28. The gaseous silicon monoxide 28 reacts with the free carbon of the free-carbon-containing material 24 to convert the free carbon to silicon carbide. The conversion of the free carbon can be used to enhance densification, reduce microcracking and/or reduce amounts of residual unreacted carbon.

In further examples, the method 20 can be employed using either of two techniques. The first technique is an ex-situ technique and the second technique is an *in-situ* technique. In the ex-situ technique, the solid silicon monoxide 26 is provided separate from, i.e., outside or exterior of, the structure 22. The *in-situ* technique involves providing the solid silicon monoxide 26 as an integral constituent in, or of, the structure 22 rather than as a separate or separated material. For example, each technique can be conducted in a heating chamber under vacuum and/or inert gas environment (e.g., argon gas). Upon heating to a target temperature range, the solid silicon monoxide 26 vaporizes to the gaseous silicon monoxide 28 that contacts and infiltrates the structure 22. For example, the target temperature can be 1250°C-1900°C, or more preferably 1280°C-1540°C. For the ex-situ technique, the gaseous silicon monoxide 28 can infiltrate through pores into the structure 22 to contact and react with the free carbon, although the degree of infiltration may be limited if porosity is low and/or if pore size is small or the porosity is substantially closed rather than interconnected. For the *in-situ* technique, the gaseous silicon monoxide 28 can infiltrate through pores of the structure 22 to contact and react with the free carbon. Further, since the solid silicon monoxide 26 is an integral constituent in, or of, the structure 22, the transport distance for the gaseous silicon monoxide 28 to the free carbon is reduced compared to the ex-situ technique. Thus, the *in-situ* technique can in some instances be more effective.

The ex-situ technique can be used separately from or in combination with the *in-situ* technique. The *in-situ* technique involves providing the solid silicon monoxide 26 in the structure 22. In this regard, as will be described in further detail below, the solid silicon monoxide 26 can be incorporated into the structure 22 as a filler material, as a coating, or combinations thereof.

As can be appreciated, the free-carbon-containing material 24 can be present in the structure 22 from any of a variety of different circumstances. In one example, the free-carbon-containing material 24 is residual carbon from a prior thermal process used to form the structure 22. For instance, the free carbon can be residual carbon from a prior thermal process used to convert a pre-ceramic polymer into a ceramic material that forms the structure 22. In this regard, the free carbon can be present in residual amounts of 5 to 30 atomic %, depending upon the efficiency of the conversion and composition of the pre-ceramic polymer. In another example, the free carbon is residual carbon in or on the surfaces of silicon carbide fibers. The free carbon on the fiber surfaces can be converted to a silicon carbide surface layer that can enhance the surface roughness of the fiber and/or serve as a relatively weak interface with a ceramic matrix, such as a silicon carbide matrix. In another example, the free carbon is from the pyrolyzation of an organic fiber and/or fiber sizing to free carbon. Additionally or alternatively, the free carbon can be intentionally incorporated into the structure 22, with the intent of later converting it to silicon carbide using the method 20.

Figure 2 illustrates another exemplary application of the method 20 to a structure 122 according to the *in-situ* technique. In this example, the solid silicon monoxide 26 is provided in a composition 130 that is coated onto a surface 132 of the structure 122. As can be appreciated, the surface 132 can be an internal surface, such as a pore surface, or an external surface, such as a fiber surface. The composition 130, in addition to the solid silicon monoxide 26, includes a polymeric carrier phase 134 throughout which the solid silicon monoxide 26 is dispersed. That is, the solid silicon monoxide 26 is a filler within the matrix provided by the polymeric carrier phase 134. For example, the polymeric carrier phase 134 is an organic polymer or silicon-containing polymer.

Portion 136 of the structure 122 serves as a substrate for the coating of the composition 130. For example, the substrate 136 can be an elongated, uniform diameter fiber, in which case the surface 132 is an exterior surface of the fiber, or a porous body, such as a fiber structure onto which the coating of the composition 130 is deposited. As previously described, upon the application of heat in the prescribed temperature range, the solid silicon monoxide 26 vaporizes to gaseous silicon monoxide 28 that reacts with the free-carbon-containing material 24 to form silicon carbide in the structure 122.

Figure 3 illustrates another example application of the method 20 to a structure 222. In this example, the structure 222 includes a porous body 236, only a portion of which is shown in the illustration. The porous body 236 includes pores 238 (one shown) in which the composition 130 is infiltrated into. For example, the composition 130 is infiltrated into the pores 238 using a polymer impregnation technique, which can be conducted under vacuum. The porous body 236 includes the free-carbon-containing material 24, which as described above can be residual free carbon that is unintentionally/undesirably present or intentionally added free carbon. Prior to the application of heat, the structure 222 is an intermediate article that includes a solid structure, here the porous body 236, having the free carbon of the free-carbon-containing material 24, along with a solid, *in-situ* source of silicon monoxide gas, which is the solid silicon monoxide 26 of the composition 130. Upon the application of heat to the prescribed temperature, the solid silicon monoxide 26 vaporizes into the gaseous silicon monoxide 28, which reacts with the free carbon to form silicon carbide. Subsequently, one or more additional infiltration cycles can be conducted to infiltrate additional amounts of the composition 130 into the pores 238, followed by one or more additional cycles of heat to react the gaseous silicon monoxide 28 with free carbon in the porous body 236.

## Claims

1. A method of producing a ceramic article, the method comprising:
heating solid silicon monoxide to provide gaseous silicon monoxide; and
exposing a structure having a free-carbon-containing material to the gaseous silicon monoxide to convert free carbon of the free-carbon-containing material to silicon carbide;
wherein the solid silicon monoxide is provided as a particulate dispersed in a preceramic polymer in a coating on at least a portion of the structure;
said method further including converting the preceramic polymer to a ceramic material.

2. The method as recited in claim 1, wherein the exposing includes heating the coated structure to convert the particulate of the solid silicon monoxide in the preceramic polymer to the gaseous silicon monoxide.

3. The method as recited in claim 1 or claim 2, wherein the particulate of the solid silicon monoxide is provided in an amount that is stoichiometrically equal to or greater than the amount of free carbon.

4. The method as recited in any one of the preceding claims, wherein the free carbon is residual free carbon from a prior thermal process used to form the structure.

5. The method as recited in any one of the preceding claims, wherein the free carbon is in a coating on the structure.

6. The method as recited in any one of the preceding claims, wherein the structure is an elongated, uniform diameter fiber.

7. The method as recited in any one of the preceding claims, wherein the structure is a porous body.

## Patentansprüche

1. Verfahren zum Herstellen eines Keramikartikels, wobei das Verfahren Folgendes umfasst:
Erwärmen von festem Siliciummonoxid, um gasförmiges Siliciummonoxid bereitzustellen; und
Inkontaktbringen einer Struktur mit einem freien Kohlenstoff enthaltenden Material mit dem gasförmigen Siliciummonoxid, um freien Kohlenstoff des freien Kohlenstoffs enthaltenden Materials in Siliciumcarbid umzuwandeln;
wobei das feste Siliciummonoxid als in einem präkeramischen Polymer dispergierte Partikel in einer Beschichtung auf wenigstens einem Abschnitt der Struktur bereitgestellt wird;
wobei das Verfahren ferner Umwandeln des präkeramischen Polymers in ein Keramikmaterial beinhaltet.

2. Verfahren nach Anspruch 1, wobei das Inkontaktbringen Erwärmen der beschichteten Struktur beinhaltet, um die Partikel des festen Siliciummonoxids in dem präkeramischen Polymer in das gasförmige Siliciummonoxid umzuwandeln.

3. Verfahren nach Anspruch 1 oder Anspruch 2, wobei die Partikel des festen Siliciummonoxids in einer Menge bereitgestellt werden, die stöchiometrisch größer gleich der Menge an freiem Kohlenstoff ist.

4. Verfahren nach einem der vorhergehenden Ansprüche, wobei es sich bei dem freien Kohlenstoff um restlichen freien Kohlenstoff aus einem vorherigen Wärmeprozess handelt, der zum Bilden der Struktur verwendet wurde.

5. Verfahren nach einem der vorhergehenden Ansprüche, wobei der freie Kohlenstoff in einer Beschichtung auf der Struktur vorliegt.

6. Verfahren nach einem der vorhergehenden Ansprüche, wobei die Struktur eine längliche Faser mit gleichmäßigem Durchmesser ist.

7. Verfahren nach einem der vorhergehenden Ansprüche, wobei die Struktur ein poröser Körper ist.

## Revendications

1. Procédé de production d'un article en céramique, le procédé comprenant :
le chauffage de monoxyde de silicium solide pour fournir du monoxyde de silicium gazeux ; et
l'exposition d'une structure ayant un matériau contenant du carbone libre au monoxyde de silicium gazeux pour convertir du carbone libre du matériau contenant du carbone libre en carbure de silicium ;
dans lequel le monoxyde de silicium solide est fourni comme une particule dispersée dans un polymère précéramique dans un revêtement sur au moins une partie de la structure ;
ledit procédé comprenant en outre la conversion du polymère précéramique en un matériau céramique.

2. Procédé selon la revendication 1, dans lequel l'exposition comprend le chauffage de la structure revêtue pour convertir la particule du monoxyde de silicium solide dans le polymère précéramique en monoxyde de silicium gazeux.

3. Procédé selon la revendication 1 ou la revendication 2, dans lequel la particule du monoxyde de silicium solide est fournie dans une quantité qui est stoechiométriquement égale ou supérieure à la quantité de carbone libre.

4. Procédé selon l'une quelconque des revendications précédentes, dans lequel le carbone libre est du carbone libre résiduel d'un procédé thermique antérieur utilisé pour former la structure.

5. Procédé selon l'une quelconque des revendications précédentes, dans lequel le carbone libre est dans un revêtement sur la structure.

6. Procédé selon l'une quelconque des revendications précédentes, dans lequel la structure est une fibre allongée, de diamètre uniforme.

7. Procédé selon l'une quelconque des revendications précédentes, dans lequel la structure est un corps poreux.
